# EUROPÄISCHE PATENTANMELDUNG

(11) **EP 2 237 023 A1**
(43) Veröffentlichungstag der Anmeldung: **06.10.2010**
(21) Anmeldenummer: 09004998.2
(22) Anmeldetag: 03.04.2009
(51) Int. Cl.: G01N 21/65, F01K 7/16

(54) **Verfahren zur Messung eines Dampfgehaltes**

(71) Anmelder: Siemens AG, Wittelsbacher Platz 2 80333 München (DE)
(72) Erfinder: Fischer, Christian, 40625 Düsseldorf (DE); Sürken, Norbert Dr., 45468 Mülheim a.d. Ruhr (DE)

(57) **Zusammenfassung**

Die Erfindung betrifft ein Verfahren zur Messung eines Dampfgehaltes in einer Dampfturbine (1), wobei eine Messeinrichtung verwendet wird, die mittels der Raman-Spektroskopie den Dampfgehalt ermittelt.

## Beschreibung

Die Erfindung betrifft ein Verfahren zur Messung eines Dampfgehaltes sowie eine Messanordnung zur Messung eines Dampfgehaltes.

In Niederdruckteilturbinen sind die Drücke und Temperaturen des Strömungsmediums derart, dass eine sog. Sättigungslinie unterschritten wird, was zur Bildung von Tröpfchen führt, die in der Dampfturbine im Strömungskanal strömen. Bei der Entspannung des Wasserdampfes wird somit die Grenzkurve zum Nassdampfgebiet unterschritten, wodurch ein unterkühlter Dampf entsteht, dessen Temperatur unter der zum dampfdruckgehörigen Sättigungstemperatur liegt. In diesem Zustand ist der Dampf rein gasförmig, wobei dieser Zustand instabil ist, denn durch das Fehlen sog. Kondensationskerne bilden sich keine Flüssigkeitströpfen. Erst bei einer bestimmt Unterkühlung setzt eine spontane Kondensation ein, die zu einem Kondensationsstoß führt, da die spontane Kondensation sehr rasch abläuft. Die dadurch entstehenden Nebeltröpfchen, die auch Primärtröpfchen genannt werden, sind vergleichsweise klein. In Folge der Beschaufelung wird ein Teil der Feuchtigkeit auszentrifugiert und sammelt sich in Form eines Wasserfilms oder einzelner Wassersträhnen auf den Hohlseiten der Leit- und Laufschaufeln. Von deren Hinterkanten löst sich der Wasserfilm ab und bildet die größeren Sekundärtropfen mit Durchmessern bis zu etwa 400µm, die die Grundlage bilden für die sog. Tropfenschlagerosion.

Wünschenswert wäre es, während des Betriebes einer Dampfturbine über den Nässegrad des Strömungsmediums Informationen zu erhalten. Das bedeutet, eine genaue Messung der im Dampf befindlichen Tröpfchen sollte mit einer hinreichenden Genauigkeit erfasst werden können. Die Erfassung dieser Kenngröße könnte in der Leittechnik zu einer verbesserten Fahrweise der Dampfturbine verwendet werden.

Es sind verschiedene Messmöglichkeiten bekannt, mit denen der Nässegrad des Strömungsmediums ermittelt werden kann. Bekannt ist beispielsweise über optische Streueffekte und Beugungseffekte an den vergleichsweise kleinen Tröpfchen eine Kenngröße zu erhalten. Es ist außerdem bekannt, eine bestimmte Menge während des Betriebes zu entnehmen, um grob den Nässegrad zu ermitteln.

Des Weiteren ist es bekannt, über Wärmekapazitätsmessungen den Nässegrad zu ermitteln. Weitere Messmethoden beruhen auf kapazitiven elektrischen Effekten sowie auf visuellen Ermittlungen, die beispielsweise mit Aufnahmen mit Hochgeschwindigkeitskameras erreicht werden kann.

Allerdings sind die vorgenannten Messmethoden für die Ermittlung des Nässegrades des Dampfes vergleichsweise ungeeignet, da sie eine unzureichende Genauigkeit aufweisen.

Wünschenswert wäre es, eine zuverlässige und genaue Messmethode zu erhalten, um den Nässegrad des Dampfes zu ermitteln.

An dieser Stelle setzt die Erfindung an, deren Aufgabe es ist, ein verbessertes Messverfahren anzugeben, mit dem der Nässegrad des Dampfes hinreichend gut bestimmt werden kann. Des Weiteren ist es Aufgabe der Erfindung, eine Messanordnung zur Messung eines Dampfgehaltes anzugeben, das möglichst genaue und reproduzierbare Ergebnis liefert.

Die auf das Verfahren hin gerichtete Aufgabe wird gelöst durch ein Verfahren zur Messung eines Dampfgehaltes, bei dem die Raman-Spektroskopie verwendet wird.

Die Raman-Spektroskopie ist eine wichtige Methode, mittels der Informationen über Schwingungs- und Rotationszustände von

Molekülen erhalten werden kann. Der Raman-Effekt beruht auf der inelastischen Streuung von Licht an Molekülen. Dieses Licht wird in der Regel von einem Laser erzeugt. Das Laserlicht wird von den Nebeltröpfchen mehr oder weniger erfasst und gestreut. Das gestreute Licht wird über eine Empfängereinheit erfasst und ausgewertet. Über die somit erfassten Informationen können Rückschlüsse über den Nässegrade des Dampfes erhalten werden. Somit erhält man sehr wirkungsvoll Informationen über die Nässe des Dampfes und kann die Fahrweise der Dampfturbine entsprechend anpassen. Die Anpassung der Dampfturbine kann hierbei entweder wirkungsgradoptimal oder leistungsoptimal erfolgen. In einer weiteren Weiterbildung kann die Fahrweise der Dampfturbine ebenso erosionsoptimal gefahren werden, d. h. dass die Entwicklung der Nebeltröpfchen weitgehend vermindert wird, damit die sog. Tropfenschlagerosion weitestgehend verhindert ist.

Die auf die Messanordnung hin gerichtete Aufgabe wird gelöst durch eine Messanordnung zur Messung eines Dampfgehaltes, mit einer auf dem Raman-Effekt beruhenden Messeinrichtung.

Vorteilhafte Weiterbildungen sind in den Unteransprüchen angegeben.

So ist es vorteilhaft, wenn eine Raman-Sonde verwendet wird, die an dem Gehäuse der Dampfturbine angeordnet werden kann. Hierbei spielt die Positionierung der Raman-Sonde eine erhebliche Rolle. Die Entwicklung der Tröpfchen im Strömungsmedium ist stark abhängig von der Lage im Strömungskanal. Tröpfchen können dort entstehen, wo die Temperatur und Drücke entsprechende Werte aufweisen. Durch die Verwendung einer Raman-Sonde können nahezu alle beliebigen Stellen im Strömungskanal der Dampfturbine mittels der Raman-Spektroskopie beobachtet werden.

In einer vorteilhaften Weiterbildung wird die Raman-Messsonde in einer Gehäusewand einer Dampfturbine form-, kraft-, reib- oder stoffschlüssig angeordnet. Die Raman-Sonde wird hierbei derart miniaturisiert und strömungsoptimiert ausgelegt, dass das Strömungsmedium im Strömungskanal durch die Raman-Sonde nicht allzu sehr behindert wird. Die Gefahr von Strömungsverlusten sollte dadurch minimiert werden.

Dadurch wird in einer vorteilhaften Weiterbildung ein Zuführgehäuse um die Messsonde angeordnet. Das Zuführgehäuse wird hierbei derart ausgebildet, dass das Strömungsmedium derart um die Messeinrichtung umgelenkt wird, dass das Strömungsmedium nicht auf die Messeinrichtung trifft, sondern durch das Zuführgehäuse geschützt wird.

Vorteilhafterweise wird die Messeinrichtung zwischen einer Leitschaufel- und einer Laufschaufelreihe angeordnet. Insbesondere wird die Messsonde in das Gehäuse der Dampfturbine integriert. Im Sinne der Erfindung wird die Messsonde derart ausgebildet, dass durch optische oder elektromagnetische Einrichtungen das Messvolumen in Größe und Position verändert werden kann.

Somit ist eine kontinuierliche Messung des Dampfgehaltes möglich. Die Messung des Dampfgehaltes ist in-situ möglich. Ein Ausführungsbeispiel der Erfindung wird anhand einer Zeichnung näher erläutert. Darin zeigen:
- Figur 1: eine Prinzipskizze der Messanordnung;
- Figur 2: eine Schnittdarstellung durch einen Teil einer Dampfturbine.

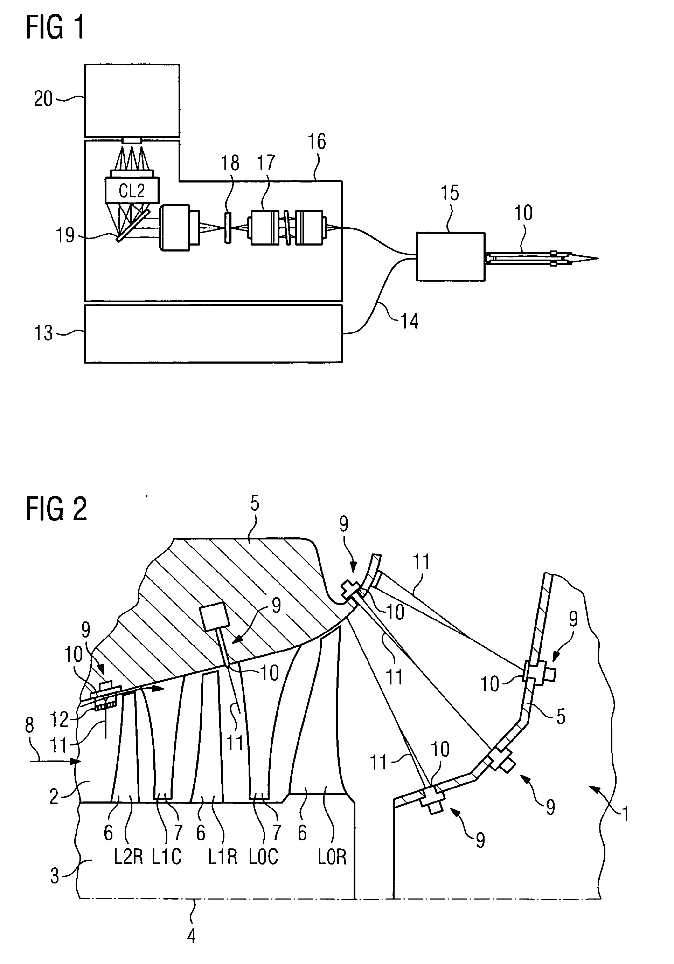

Die Figur 2 zeigt einen Schnitt durch einen Teil einer Dampfturbine 1. Diese Dampfturbine ist vorzugsweise eine Niederdruck-Teilturbine, d.h. der im Strömungskanal 2 strömende Dampf weist vergleichsweise niedrige Temperaturen und einen niedrigen Druck auf. Die Dampfturbine 1 umfasst einen Rotor 3, der um eine Rotationsachse 4 drehbar angeordnet ist. Um den Rotor 3 ist ein Gehäuse 5 angeordnet. Der Rotor 3 umfasst mehrere durch L2R, L1R und L0R gekennzeichnete Laufschaufeln 6 auf. Diese Laufschaufeln 6 sind zu sog. Laufschaufelreihen angeordnet. Zwischen den Laufschaufelreihen sind Leitschaufeln 7 angeordnet, die durch L1C und L0C gekennzeichnet sind. Im Betrieb strömt ein Strömungsmedium, hier Dampf im Strömungskanal 2 entlang einer Strömungsrichtung 8. Nach einer letzten Laufschaufelreihe 6 (LOR) wird der Dampf umgelenkt und strömt aus der Niederdruckteilturbine 1 heraus.

Im Strömungskanal 2 können die physikalischen Bedingungen derart sein, dass der Dampf kondensiert und Nebeltröpfchen bildet. Diese Nebeltröpfchen werden durch eine Messanordnung 9, die eine Messeinrichtung umfasst, die auf den Raman-Effekt beruht erfasst. Die Messanordnung 9 umfasst hierbei eine Raman-Messsonde 10, die form-, kraft-, reib- oder stoffschlüssig im Gehäuse 5 angeordnet ist. Die Raman-Messsonde sendet einen Laserstrahl 11 aus, der in einem bestimmten Winkelbereich eine räumliche Unschärfe aufweist. Sofern der Laserstrahl 11 ein Nebeltröpfchen, der im Strömungskanal 2 sich befindet, gestreut wird, wird das gestreute Licht ebenfalls von der Messanordnung 9 erfasst und ausgewertet. Die Messanordnung 9 kann daher an einer Stelle im Gehäuse sowohl als Sender als auch als Empfangseinheit ausgebildet sein. In einer alternativen Ausführungsform kann an einer ersten Stelle im Gehäuse die Messanordnung 9, eine als Raman-Messsonde ausgebildete Sendeeinheit und an einer anderen Stelle im Gehäuse 5 eine als Raman-Messsonde ausgebildete Empfangseinheit angeordnet werden, die das vom Nebeltropfen gestreute Licht erfasst.

Die in der Messanordnung 9 erfassten Informationen können zu einer Leitwarte übertragen werden und dort dazu verwendet werden, um die Fahrweise der Dampfturbine entsprechend der Bildung der Nebeltröpfchen anzupassen. Hierbei kann die Fahrweise wirkungsgradoptimal, leistungsoptimal oder erosionsoptimal betrieben werden.

Die Messanordnung 9 wird nach einer letzten Laufschaufelreihe L0R angeordnet. Um die Messsonde 10 wird ein Zuführgehäuse 12 angeordnet. Das Zuführgehäuse 12 schützt die Raman-Messsonde 10 vor störenden Partikeln im Strömungskanal.

In der Figur 1 ist eine Prinzipskizze des Raman-spektroskopischen Messverfahrens zu sehen. Die von dem Ar- oder HeNe-Laser 13 emittierte sichtbare Strahlung gelangt über ein Glasfaser-Kabel 14 in den Sondenkopf 15 und wird über die Messsonde 10 in den Strömungskanal fokussiert, wo Nebeltröpfchen zu erwarten sind.

Das von im Strömungskanal 2 befindliche nebeltröpfchengestreute Raman-Licht wird von der Raman-Messsonde 10 gesammelt und gelangt über den Sondenkopf 15 in den Spektrographen 16. Im Sondenkopf 15 selber wird ein Teil der Rayligh-Strahlung herausgefiltert.

Im Spektrographen wird die Rayligh-Strahlung mit Hilfe eines Notch-Filters 17 abgetrennt. Über einen Spalt 18, ein Gitter 19 gelangt das Licht zu einem CCD-Detektor 20 und wird dort ausgewertet. Die im CCD-Detektor 20 ermittelten physikalischen Messgrößen werden zu einer Leitwarte geführt, und werden dort entsprechend ausgewertet, wobei eine Fahrweise der Dampfturbine geändert werden kann, um den Wirkungsgrad der Dampfturbine zu optimieren. Des Weiteren können die Werte dazu verwendet werden, um die Dampfturbine leistungsoptimal zu fahren bzw. auch erosionsoptimal zu fahren.

## Patentansprüche

1. Verfahren zur Messung eines Dampfgehaltes,
bei dem die Raman-Spektroskopie verwendet wird.

2. Verfahren nach Anspruch 1,
wobei das Verfahren in einer Dampfturbine (1) angewendet wird.

3. Verfahren nach Anspruch 1 oder 2,
wobei eine Raman-Sonde (10) verwendet wird, die in der Dampfturbine (1) angeordnet wird.

4. Verfahren nach Anspruch 3,
wobei die Raman-Sonde (10) im Strömungskanal (2) der Dampfturbine (1) angeordnet wird.

5. Messanordnung (9) zur Messung eines Dampfgehaltes,
mit einer auf dem Raman-Effekt beruhenden Messeinrichtung.

6. Messanordnung (9) nach Anspruch 5,
wobei die Messeinrichtung eine Raman-Messsonde (10) umfasst.

7. Messanordnung (9) nach Anspruch 6,
wobei die Raman-Messsonde (10) in einer Gehäusewand einer Dampfturbine (1) form-, kraft-, reib- oder stoffschlüssig angeordnet ist.

8. Messanordnung (9) nach Anspruch 7,
wobei ein Zuführgehäuse (12) um die Messsonde (10) angeordnet ist.

9. Messanordnung (9) nach Anspruch 7, oder 8,
wobei die Messeinrichtung im Strömungskanal (2) der Dampfturbine (1) angeordnet ist.

10. Messanordnung (9) nach einem der Ansprüche 7 bis 9,
wobei die Messeinrichtung zwischen einer Leit- (7) und einer Laufschaufelreihe (6) angeordnet ist.

11. Messanordnung (9) nach einem der Ansprüche 7 bis 9,
wobei die Messeinrichtung nach einer letzten Leit- (7) oder Laufschaufelreihe (6) angeordnet ist.
